# DEMANDE DE BREVET EUROPEEN

(11) **EP 1 647 468 A1**
(43) Date de publication de la demande: **19.04.2006**
(21) Numéro de dépôt: 05300760.5
(22) Date de dépôt: 20.09.2005
(51) Int. Cl.: B62D 25/04

(54) **Element de structure pour vehicule automobile**

(30) Priorité: 28.09.2004 FR 0452176
(71) Demandeur: Peugeot Citroen Automobiles SA, 78943 Vélizy-Villacoublay Cedex (FR)
(72) Inventeur: Masfrand, Stéphane, 78160, Marly-Le -Roy (FR)

(57) **Abrégé**

L'invention se rapporte à un élément de structure pour véhicule automobile comportant une première enveloppe (10), une deuxième enveloppe (11) qui, solidaire de la première, forme un cylindre creux (16), au moins une pièce de renfort (12) qui, intercalée entre lesdites première et deuxième enveloppes, s'étend sensiblement dans ledit cylindre creux afin d'améliorer les caractéristiques mécaniques de l'ensemble. Selon l'invention, ladite au moins une pièce de renfort est partiellement orientée sensiblement parallèlement par rapport au plan longitudinal dudit véhicule automobile afin d'optimiser la grandeur de la section dudit élément de structure.

L'invention trouve son application notamment dans le domaine des structures de véhicule automobile.

## Description

L'invention se rapporte à un élément de structure pour véhicule automobile et notamment un tel élément utilisé pour un montant de baie.

Les tests de performance au choc frontal des véhicules automobiles sont de plus en plus sévères. Les constructeurs sont ainsi obligés de continuellement grossir les pièces de structures afin de renforcer les habitacles. Cela se traduit par un alourdissement et une augmentation de l'encombrement du véhicule automobile. Ce grossissement des moyens de renfort est particulièrement perceptible sur les montants de baie. En effet, l'amélioration des caractéristiques mécaniques implique une augmentation de leur section, ce qui est, en plus des inconvénients cités précédemment, également néfaste à la visibilité périphérique des occupants du véhicule automobile.

Le but de la présente invention est de pallier tout ou partie les inconvénients cités précédemment en proposant un élément de structure résistant aux mêmes contraintes mécaniques qu'un élément classique tout en jouissant d'un encombrement et d'une masse amoindris.

A cet effet, l'invention se rapporte à un élément de structure pour véhicule automobile comportant une première enveloppe, une deuxième enveloppe qui, solidaire de la première, forme un cylindre creux, au moins une pièce de renfort qui, intercalée entre lesdites première et deuxième enveloppes, s'étend sensiblement dans ledit cylindre creux afin d'améliorer les caractéristiques mécaniques de l'ensemble caractérisé en ce que ladite au moins une pièce de renfort est partiellement orientée sensiblement parallèlement par rapport au plan longitudinal dudit véhicule automobile afin d'optimiser la grandeur de la section dudit élément de structure.

Conformément à d'autres caractéristiques avantageuses de l'invention :
- la section de ladite au moins une pièce de renfort comporte sur sa section au moins un angle aigu ;
- la section de ladite au moins une pièce de renfort comporte deux angles aigus propres à former une section sensiblement en Z dont la barre centrale est ladite partie sensiblement parallèle au plan longitudinal dudit véhicule automobile ;
- la partie de ladite au moins une pièce de renfort n'étant pas sensiblement parallèle au plan longitudinal dudit véhicule automobile, est en vis-à-vis avec ledit cylindre creux ; l'éloignement dudit vis-à-vis avec le cylindre creux n'excédant pas cinq millimètres ;
- l'élément est monté sur au moins une partie d'un des montants de baie dudit véhicule automobile.

D'autres particularités et avantages ressortiront clairement de la description qui en est faite ci-après, à titre indicatif et nullement limitatif, en référence aux dessins annexés, dans lesquelles :
- la figure 1 est une vue schématique en perspective d'une structure de véhicule automobile ;
- la figure 2 est une coupe, selon A-A de la figure 1, d'un élément de structure classique ;
- la figure 3 est une section, selon A-A de la figure 1, d'un élément de structure selon une première variante de l'invention ;
- la figure 4 est une section selon A-A de la figure 1 d'un élément de structure selon une deuxième variante de l'invention.

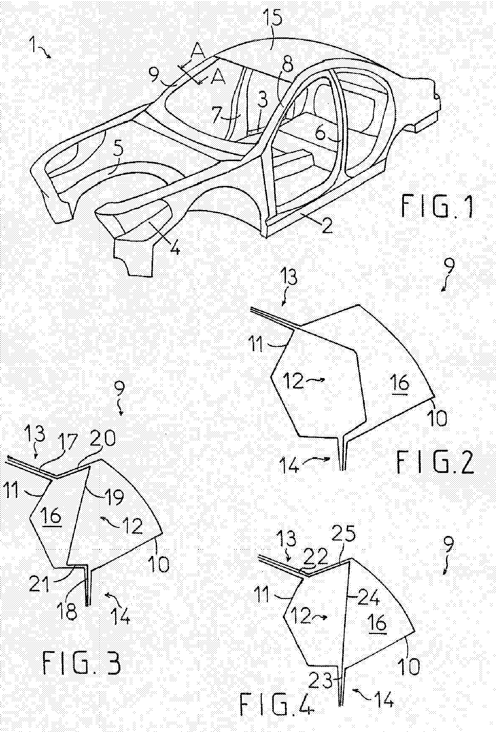

Dans l'exemple illustré à la figure 1, on peut voir une caisse nue d'un véhicule automobile, c'est-à-dire sa structure métallique avant montage, généralement annoté 1. La caisse 1 est généralement symétrique par rapport à son plan longitudinal médian. Cela signifie que ce qu'elle possède sur un de ses flancs, se retrouvera sur son autre flanc symétriquement. Ainsi dans le cas où un axe X représente la direction de la longueur du véhicule, un axe Y sa largeur et un axe Z sa hauteur, le plan longitudinal est celui dirigé selon XZ.

Ainsi, la caisse 1 comporte des paires de zones particulières, appelées ci-après éléments de structure, comme les longerons 2 et 3, les brancards 4 et 5, les pieds milieux 6 et 7 ou les montants de baie 8 et 9. Ce sont des zones particulières car, lors d'un choc frontal ou latéral, elles sont utilisées pour « programmer » la déformation de la caisse 1 et ainsi minimiser les intrusions dans l'habitacle du véhicule automobile.

La configuration des montants de baie 8 et 9 est importante principalement lors de retournement ou de choc frontal du véhicule automobile. A la figure 2, on peut voir un exemple de section de montant de baie 9 communément utilisée selon la coupe A-A de la figure 1. La section est constituée par une première enveloppe 10, une seconde 11 et une pièce de renfort 12.

La première enveloppe 10 est aussi appelé enveloppe externe du fait qu'elle donne vers l'extérieur du véhicule automobile. Selon la même logique, la deuxième enveloppe 11 est appelé enveloppe interne car elle donne vers l'habitable. Ces deux enveloppes 10 et 11 qui, généralement constituées en métal embouti, sont solidaires l'une de l'autre, par exemple par soudage, aux extrémités 13 et 14. Cette solidarisation permet de créer un cylindre creux 16 qui, dans l'exemple de la figure 2, est à base hexagonale.

L'extrémité 13 sensiblement horizontale est destinée à interagir soit avec le pare-brise soit avec le pavillon 15 (figure 1). L'extrémité 14, sensiblement verticale, est destinée à interagir avec l'ouvrant avant associé (droit dans notre exemple) dudit véhicule automobile.

La pièce de renfort 12 est un profil embouti généralement métallique qui, dans l'exemple de la figure 2, comporte une section en forme de C. Elle est intercalée et soudée entre les enveloppes 10 et 11 au niveau des extrémités 13 et 14. Elle permet d'améliorer la résistance mécanique globale du montant de baie 9 en courant dans le cylindre creux 16. Sa forme, bien évidemment, est primordiale afin de déterminer les caractéristiques du renfort. C'est pourquoi, lorsque l'on veut améliorer les caractéristiques mécaniques d'élément de structure, il est possible de faire varier la section, la forme et l'épaisseur des enveloppes 10, 11 et/ou de la pièce de renfort 12.

Selon l'invention, l'amélioration est principalement apportée par la forme de la pièce de renfort 12. Dans l'exemple de la figure 3, un montant de baie 9, de constitution similaire à celui de la figure 2, est représenté. Le cylindre creux 16 est ainsi à base hexagonale et seule la section de la pièce de renfort 12 est de constitution différente.

Selon une première variante, la section de la pièce de renfort 12 comporte principalement 5 segments obtenus préférentiellement à partir d'une seule pièce emboutie. Les segments 17 et 18 sont utilisés pour rendre solidaire la pièce de renfort 12 au cylindre creux 16, par exemple par soudage, respectivement à ses extrémités 13 et 14.

Le segment principal 19 est monté préférentiellement de manière à ce que le volume, sensiblement plan, créé par ce segment qui court dans le cylindre creux 16, soit sensiblement parallèle au plan longitudinal du véhicule automobile. Cette caractéristique permet, en effet, lors de choc frontal du véhicule automobile de transmettre les forces sensiblement directement sur la tranche 19 dudit volume, c'est-à-dire colinéairement à la longueur dudit volume sensiblement plan. Cette orientation est choisie pour sa plus grande résistance à la flexion par rapport à l'exemple illustré à la figure 2.

Afin de pouvoir rendre ledit volume sensiblement parallèle au plan longitudinal du véhicule automobile, le segment 19, dans l'exemple de la figure 3, doit être monté sensiblement vertical.

Les deux autres segments 20 et 21 sont utilisés pour lier le segment 19 respectivement aux segments 17 et 18. Ils sont également utiles pour la résistance mécanique en flexion de l'élément de structure (dans notre exemple un montant de baie 9).

Pour répondre à ces deux critères, la section de la pièce de renfort 12 de la figure 3 comporte deux angles aigus respectivement entre les segments 19-20 et 19-21. Grâce à ces angles aigus, les segments 20 et 21 se trouvent en vis-à-vis du cylindre creux 16 et ainsi viennent tapisser son diamètre intérieur. Cela permet à la pièce de renfort 12 de mieux soutenir les efforts qui passent par le cylindre creux 16, c'est-à-dire par les enveloppes 10 et 11, en les faisant également passer par les segments 20 et 21.

Préférentiellement selon l'invention, l'éloignement dudit vis-à-vis n'excède pas cinq millimètres. Cela veut bien-sûr signifier que les segments 20 et 21 peuvent être en contact avec le diamètre intérieur du cylindre creux 16.

Les segments 19, 20 et 21 forment finalement un Z dans le cas de la figure 3. Bien évidemment, la figure 3 représentant un montant de baie droit 9, un Z symétrique par rapport au plan longitudinal du véhicule automobile apparaîtrait pour un montant de baie gauche 8.

Selon une deuxième variante, la section de la pièce de renfort 12 comporte principalement 4 segments obtenus préférentiellement à partir d'une seule pièce emboutie. Les segments 22 et 23 sont utilisés pour rendre solidaire la pièce de renfort 12 au cylindre creux 16, par exemple par soudage, respectivement à ses extrémités 13 et 14.

Le segment principal 24 est monté préférentiellement de manière à ce que le volume, sensiblement plan, créé par ce segment courant dans le cylindre creux 16 soit sensiblement parallèle au plan longitudinal du véhicule automobile. Comme expliqué ci-dessus pour la première variante, cette orientation permet d'obtenir une résistance mécanique au choc frontal plus grande.

Afin de pouvoir rendre ledit volume sensiblement parallèle au plan longitudinal du véhicule automobile, le segment 24, dans l'exemple de la figure 4, doit également être monté sensiblement vertical.

Le dernier segment 25 est utilisé pour lier le segment 24 au segment 22. En effet à son autre extrémité, le segment 24 est directement lié au segment 23. La section de la pièce de renfort 12 de la figure 4 comporte ainsi un seul angle aigu respectivement entre les segments 24 et 25. Comme dans la première variante, cet angle aigu permet au segment 25 de se trouver en vis-à-vis du cylindre creux 16 et ainsi de venir tapisser son diamètre intérieur.

Par rapport à la première variante, cela permet toujours à la pièce de renfort 12 de soutenir les efforts qui passent par le cylindre creux 16, c'est-à-dire par les enveloppes 10 et 11, en les faisant également passer par le segment 25. Cette deuxième variante est cependant moins efficace mais plus légère car utilisant moins de matière. De la même manière que pour la première variante, préférentiellement selon l'invention, l'éloignement dudit vis-à-vis n'excède pas cinq millimètres.

Les segments 24 et 25 forment finalement un 7 dans le cas de la figure 4. Bien évidemment, la figure 4 représentant un montant de baie droit 9, un 7 symétrique par rapport au plan longitudinal du véhicule automobile apparaîtrait pour un montant de baie gauche 8.

Dans le cas de la première variante à la figure 3, l'application de l'invention permet pour une même caractéristique mécanique de diminuer de 20% la section de l'élément de structure par rapport à une solution classique présentée à la figure 2. Cela permet donc d'obtenir un élément de structure de plus faible encombrement et de masse diminuée.

Bien entendu, la présente invention ne se limite pas à l'exemple illustré mais est susceptible de diverses variantes et modifications qui apparaîtront à l'homme de l'art. En particulier, l'application de cet élément de structure n'est pas limitée aux montants de baie 8 et 9 mais également à d'autres éléments de structure comme, par exemple, les longerons 2 et 3. De plus, la pièce de renfort 12 qui court dans le cylindre creux 16 peut le faire sur toute la longueur dudit cylindre ou sur seulement une ou plusieurs partie.

## Revendications

1. Elément de structure monté au moins sur une partie d'un montant de baie d'un véhicule automobile comportant une première enveloppe (10), une deuxième enveloppe (11) solidaire de la première pour former un cylindre creux (16), au moins une pièce de renfort (12) qui, intercalée entre lesdites première et deuxième enveloppes, s'étend sensiblement dans ledit cylindre creux afin d'améliorer les caractéristiques mécaniques de l'ensemble **caractérisé en ce que** ladite au moins une pièce de renfort comporte un segment principal (19 ; 24) dans la section du montant de baie, monté de manière que le volume, sensiblement plan, créé par ce segment courant dans le cylindre creux (16) est sensiblement parallèle au plan longitudinal du véhicule, et **en ce que** deux segments (17 ; 18 ; 22 ; 23) situés de part et d'autre du segment principal sont utilisés pour rendre la pièce de renfort (12) solidaire du cylindre creux (16).

2. Elément de structure selon la revendication 1, **caractérisé en ce que** la section de ladite au moins une pièce de renfort comporte sur sa section au moins un angle aigu.

3. Elément de structure selon la revendication 2, **caractérisé en ce que** la section de ladite au moins une pièce de renfort comporte deux angles aigus propres à former une section sensiblement en Z dont la barre centrale (19) est ladite partie sensiblement parallèle au plan longitudinal dudit véhicule automobile.

4. Elément de structure selon l'une des revendications précédentes, **caractérisé en ce que** la partie (17, 18, 20, 21, 22, 23, 25) de ladite au moins une pièce de renfort n'étant pas sensiblement parallèle au plan longitudinal dudit véhicule automobile, est en vis-à-vis avec ledit cylindre creux.

5. Elément de structure selon la revendication 4, **caractérisé en ce que** l'éloignement dudit vis-à-vis avec le cylindre creux (16) n'excède pas cinq millimètres.
